# EUROPÄISCHE PATENTANMELDUNG

(11) **EP 2 793 068 A1**
(43) Veröffentlichungstag der Anmeldung: **22.10.2014**
(21) Anmeldenummer: 14161319.0
(22) Anmeldetag: 24.03.2014
(51) Int. Cl.: G02B 21/24

(54) **Steuergerät und Verfahren zur Steuerung eines motorisierten Digitalmikroskops**

(30) Priorität: 19.04.2013 DE 102013007000
(71) Anmelder: Carl Zeiss Microscopy GmbH, 07745 Jena (DE)
(72) Erfinder: Jockusch, Wolf, 37079 Göttingen (DE); Schrem, Robert, 70178 Stuttgart (DE); Weber, Peter, 72213 Altensteig (DE); Gaiduk, Alexander, 07745 Jena (DE); Stehr, Dominik, 07745 Jena (DE); Radt, Benno, 07743 Jena (DE); Gnauck, Markus, 07745 Jena (DE)
(74) Vertreter: Müller, Silke

(57) **Zusammenfassung**

Die Erfindung betrifft ein Steuergerät und ein Verfahren zur Steuerung eines motorisierten Digitalmikroskops. Das Steuergerät umfasst mindestens ein erstes Modul (01) zur Steuerung der Hardware, der Software und des Arbeitsablaufs des Digitalmikroskops bei der Untersuchung einer Probe. Erfindungsgemäß umfasst das erste Modul (01) ein erstes Eingabemittel (02, 16) mit einer haptischen Rückkopplung zur Steuerung von Funktionen des Digitalmikroskops. In einem erfindungsgemäßen Verfahren erfolgt eine Dateneigabe über ein erstes Eingabemittel, wobei eine haptische Rückkopplung über den Erfolg oder Verlauf der Eingabe generiert wird.

## Beschreibung

Die Erfindung betrifft ein Steuergerät und ein Verfahren zur Steuerung eines motorisierten Digitalmikroskops.

Mikroskope, insbesondere Digitalmikroskope verfügen je nach Einsatz und Anwendungsfall über eine Vielzahl von Parametern, die im Rahmen der Bedienung und Steuerung geändert, angepasst und kontrolliert werden müssen. So gehören beispielsweise bei einem konventionellen Lichtmikroskop die Einstellung des Fokus, die Veränderung des Abbildungsmaßstabes, die Veränderung und Auswahl von Kontrast- und Beleuchtungsverfahren, die Lichtregelung, die Verschiebung des Objektes und weitere Funktionen zu den Möglichkeiten, die Beobachtung zu optimieren.

Aus dem Stand der Technik sind zahlreiche Anwendungen zur Steuerung von Bildanzeigegeräten und Mikroskopen bekannt.

Im Bereich der Mikroskopie beschreibt beispielsweise die DE 103 32 468 B4 ein Mikroskop mit einem Okular, bei dem mittels einer Bedienvorrichtung Betriebsparameter und Betriebsmodi des Mikroskops einstellbar sind. Die Bedienvorrichtung umfasst koaxiale Einstellknöpfe zur Objektpositionierung, Schalter zur Einstellung der Lampenhelligkeit und zum Wechsel des Objektives. Die Bedienvorrichtung ist separat vom Mikroskop vorgesehen. Im Mikroskopstativ ist eine Anzeigeeinheit mit Bedienoberfläche integriert.

Die DE 10 2006 010 104 A1 beschreibt eine modulare Bedieneinheit für ein Mikroskop, die eine Anzeigeeinheit für Soll- und Ist-Einstellwerte und Bedienelemente zur Vorgabe von Soll-Einstellwerten umfasst. Dabei können Drehgeber, Tasten, Schieberegler Scroll-Räder und Touch-Screens, als auch akustische Signalausgabe Verwendung finden. Die Bedieneinheit kann aus einzelnen Modulen nach Bedarf zusammengestellt werden.

Beispielsweise aus US 2011 0013010 A1, US 2011 0149387 A1, DE 10 2010 063 392 A1, DE 10 2007 039 450 A1 oder DE 103 55 526 A1 sind Mikroskop- oder Beobachtungssysteme bekannt, bei denen Benutzereingaben zur Steuerung des Mikroskops über einen Touch-Screen erfolgen.

Aus US 5,557,456 ist ein Steuergerät zur Steuerung der Position eines motorisierten Mikroskoptisches in drei Achsen des kartesischen Koordinatensystems bekannt. Mittels dreier Knöpfe ist der Tisch in drei Freiheitsgraden steuerbar, um Focus und Bildausschnitt richtig einstellen zu können.

Die DE 102 59 009 B3 zeigt eine Bedieneinheit für ein optisches System mit einem Trackball und weiteren drehbaren Bedienelementen, welche koaxial auf einer senkrechten Achse angeordnet sind.

Die DE 103 14 752 A1 beschreibt einen koaxialen Doppelrad-Bedienknopf für optische Systeme. Der Bedienknopf hat einen umlaufenden Ansatz, durch den der Benutzer fühlt, wenn er sich mit den Fingern dem Ende eines der Drehelemente nähert.

Aus DE 10 2006 010 104 A1 ist eine modulare Bedieneinheit bekannt.

Die DE 102007 045 669 A1 beschreibt einen Fokusbedienknopf mit zwei koaxialen, gegeneinander nicht verdrehbaren Bedienknöpfen und einer Umschalteinrichtung. Die Umschalteinrichtung schaltet zwischen Grob- und Feinverstellung. Die Umschaltung kann durch einen Annäherungssensor oder einen axialen Endlagenschalter erfolgen.

In der DE 10 2011 017 250 A1 ist ein haptisches Feedback-System für Touch-Screens beschrieben.

Es ist die Aufgabe der Erfindung, die Bedienung und Steuerung eines Digitalmikroskops möglichst benutzerfreundlich und den jeweils erforderlichen Bedingungen anpassbar zu gestalten und ein Steuergerät und ein Verfahren hierfür bereit zu stellen.

Die Aufgabe wird erfindungsgemäß durch ein Steuergerät zur Steuerung eines motorisierten Digitalmikroskops mit den Merkmalen des Anspruchs 1 und durch ein Verfahren zur Steuerung eines Digitalmikroskops mit einem solchen Steuergerät gemäß Anspruch 12 gelöst. Vorteilhafte Ausgestaltungsvarianten des Steuergerätes bzw. des Verfahrens sind in den Unteransprüchen angegeben.

Ein erfindungsgemäßes Steuergerät für ein motorisiertes Digitalmikroskop ist vorzugsweise modular aufgebaut und dient der kompletten Steuerung der Mikroskop-Hardware, der Software und des Arbeitsablaufs bei der Untersuchung einer Probe mit dem Mikroskop. Selbstverständlich ist auch eine ODER-Verknüpfung der vorgenannten Steuerschritte möglich. Dabei sind im Mikroskopstativ keine mechanischen oder elektronischen Elemente vorhanden, die dem Nutzer gestatten, Einstellungen und Parameter des Arbeitsablaufs zu ändern. Lediglich durch das modular gestaltete Steuergerät ist dies möglich.

Das Steuergerät umfasst zumindest ein erstes Eingabemittel zur Steuerung von Funktionen des Digitalmikroskops (Software- und Hardwarefunktionen). Das erste Eingabemittel hat erfindungsgemäß eine haptische Rückkopplung (force feedback), die dem Benutzer fühlbare Informationen zu Bedienungs- und Einstellungsdetails, beispielsweise das Erreichen eines Anschlages, der Geschwindigkeit der Einstellung und weitere Informationen liefert. Dadurch kann sich der Benutzer während der Bedienung des Mikroskops besser auf die Betrachtung des Objektes konzentrieren, da beispielsweise beim Einstellen einer Vergrößerung eine relevante haptische Rückkopplung über das Eingabemittel erhält und hierfür bei häufigen Einstellungen keine visuelle Kontrolle benötigt wird.

Ein erfindungsgemäßes Verfahren zur Steuerung eines Digitalmikroskops, bei dem eine Steuerung von Mikroskop-Hardwarefunktionen und/oder Softwarefunktionen und/oder des Arbeitsablaufes des Digitalmikroskops durch eine Dateneigabe über ein erstes Eingabemittel erfolgt, zeichnet sich dadurch aus, dass eine haptische Rückkopplung an dem ersten Eingabemittel über den Erfolg oder Verlauf der Eingabe generiert wird.

Die haptische Rückkopplung kann in bestimmten Steuerfunktionen ein Betätigen des ersten Eingabemittels mittels einer STOP-Funktion verhindern oder erschweren.

Die haptische Rückkopplung kann selbstverständlich situationsbezogen abschaltbar sein.

Das Steuergerät dient der Steuerung der gesamten Mikroskop-Hardware, einschließlich der der relativen Positionierung der optischen Achse und der Probe. Dabei können verschiedene Bezugskoordinatensysteme gewählt und Befehle ausgeführt werden. Bewegungen sind beispielsweise als Translationen im kartesischen Koordinatensystem, als Rotationen oder Neigungen einstellbar.

Bestimmte Softwarefunktionen des Digitalmikroskops sind vorzugsweise ebenfalls mittels des Steuergerätes dynamisch durch den Benutzer definierbar.

Die Steuerung einer im Mikroskop integrierten Bildverarbeitungseinheit ist ebenfalls durch das Steuergerät möglich.

Ebenso ist die Steuerung einer im Mikroskop integrierten Beleuchtungseinrichtung mit dem Steuergerät möglich.

Das Steuergerät hat vorzugsweise zwei Betriebsmodi:
- Datenerfassungsmodus: Das Steuergerät ermöglicht die Steuerung aller Mikroskop-Hardware-Funktionen und die Datenerfassung. Dieser Modus erfordert eine Interaktion zwischen dem Benutzer und der Hardware bzw. dem Benutzer und der Datenerfassungs-Software.
- Datendarstellungsmodus: Das Steuergerät dient als Eingabegerät zur Bedienung der Software. Auch hier kann eine haptische Rückkopplung erfolgen.

Die Steuerung der Mikroskop-Hardware-Funktionen umfasst
- die Steuerung der Y- und Y-Position eines Objekttisches;
- die Steuerung der Zoom-Einstellung (Vergrößerungsfaktor);
- die Steuerung des Fokus des Objektives (Z-Position des Objekttisches, bzw. Abstand der Objekttisches zum Objektiv);
- Auslösen der Bild- oder Videoaufnahme bzw. -erfassung und Steuerung der Parameter der Aufnahme;
- die Steuerung der Beleuchtung.

Das Steuergerät ist mit einem Kabel oder kabellos an das Digitalmikroskop koppelbar. Bei der kabellosen Variante umfasst das Steuergerät eine vorzugsweise aufladbare Batterie. In verschiedenen Ausführungsformen der Erfindung können Ausgabemittel und weitere Eingabemittel im Steuergerät integriert sein.

Das Steuergerät umfasst zumindest die zuvor beschriebenen verschiedenen Funktionseinheiten, die in einem ersten Modul angeordnet sind.

Das erste Eingabemittel dient dabei vorzugsweise der Steuerung der Mikroskopfunktionen zumindest im Datenerfassungsmodus.

In einer ersten bevorzugten Ausführungsform eines erfindungsgemäßen Steuergerätes ist das erste Eingabemittel ein doppelter Dreh/Drück-Bedienknopf mit haptischer Rückkopplung, bei dem ein erster Knopf und ein zweiter Knopf koaxial angeordnet sind. Solche Doppel-Bedienknöpfe in einfacher Ausführung sind prinzipiell in der Mikroskopie üblich und dem Fachmann bekannt.

Force-Feedback-Wheels sind im Stand der Technik in verschiedenen Anwendungsgebieten genannt, beispielsweise in US 8,175,512 B2 oder US 8,154,537 B2.

Bei einem Doppel-Bedienknopf dient in der Mikroskopie beispielsweise das untere Rad zur Einstellung der X-Position des Objekttisches und/oder des Fokus des Objektivs, das obere Rad zur Einstellung der Y-Position des Objekttisches und/oder des Zoombereiches des Objektivs.

Das haptische Feedback erleichtert die Bedienung enorm, da der Nutzer direkt spürt, welche Eingabe er vornimmt und sich so ganz auf das Anschauen des Bildes konzentrieren kann.

Die haptischen Feedback-Funktionen sind vorzugsweise per Software definiert und nutzerspezifisch anpassbar.

Bei der Grobeinstellung der der X- und Y-Position erfolgt vorzugsweise eine leichte Kraftrückkopplung bei schnellem kontinuierlichen Drehen des Bedienknopfes, während bei der Feineinstellung bei langsamem Drehen eine mittelstarke Rückkopplung erfolgt. Sind die Grenzen der Positionierung erreicht, kann der Knopf vorzugsweise nicht mehr weitergedreht werden. Die Einstellungen für die Kraftrückkopplung können vorzugsweise per Software vorgenommen werden.

Bei der Einstellung von Zoom kann beispielsweise beim Drehen des Knopfes eine stufenweise oder kontinuierliche Kraftrückkopplung erfolgen, on Abhängigkeit davon, ob der optische Zoom oder der Digitalzoom in Schritten oder kontinuierlich eingestellt wird.

Eine kurzzeitig höhere Kraftrückkopplung könnte beispielsweise erfolgen, wenn eine Umschaltung von Vorschau zur optischem Zoom oder von optischen Zoom zu digitalem Zoom erfolgt. Eine Stop-Rückkopplung kann erfolgen, wenn die geringste Vergrößerung (komplettes Vorschaubild) oder die maximale Vergrößerung eingestellt ist.

Bei der Fokus-Einstellung kann die Kraftrückkopplung anlog zur Zoom-Einstellungen erfolgen, also stufenweise oder kontinuierlich beim Drehen des Knopfes. Beim Erreichen der Grenzen der Verstellung des Objekttisches in Z-Richtung oder des Fokustriebes am Objektiv, ist die Kraftrückkopplung eine Stop-Funktion, so dass der Knopf nicht weitergedreht werden kann.

In dieser Ausführungsform kann das erste Modul ein zweites oder weitere Eingabemittel umfassen. Das zweite Eingabemittel ist beispielsweise eine Tastatur, ein Touch-Display oder Multi-Touch-Pad.

In alternativen Ausführungsformen können zweite und weitere Module mit Ein- und/oder Ausgabemitteln an das erste Modul angekoppelt werden, um den Funktionsumfang des Steuergerätes an die speziellen Ausstattungsmerkmale des Digitalmikroskops und an Benutzerwünsche anzupassen. Diese Ankopplung kann mit Hilfe von mechanischen und/oder magnetischen Mitteln erfolgen. Der Datenaustauch zwischen dem ersten und den ggf. weiteren Modulen kann drahtgebunden oder drahtlos erfolgen. Der Fachmann kann sowohl die mechanische als auch die elektrischen Kopplung der Module konfigurieren.

Als weiteres Eingabemittel kann beispielsweise eine Tastatur verwendet werden, welche Funktionen zur Bedienung der Hard- und Software des Digitalmikroskops, insbesondere für Texteinträge in die Software, bereitstellt. Die Tastatur kann als zweites Modul an das erste Modul angekoppelt sein.

Als Eingabemittel kann auch eine Mehrfach-Berührungsfläche (Multi-Touch-Pad) verwendet werden, welche die Funktionen einer Mouse bei der Software-Bedienung und der Bedienung Mikroskop-spezifischer Funktionen übernimmt. Die Auswahl der hierfür möglichen Funktionen ist abhängig vom eingestellten Betriebsmodus. Auch die Mehrfachberührungsfläche kann eine haptische Rückkopplung aufweisen, wenn sie als erstes Eingabemittel Verwendung findet.

Die Mehrfach-Berührungsfläche kann dabei zum Beispiel zur Ausführung der nachfolgend angeführten Funktionen dienen.

Im Datenerfassungsmodus können Cursor-Bewegung mittels eines Ein-Finger-Slides, Left-Mouse-Click oder Left-Double-Click mittels Ein-Finger- Click und ein Right-Mouse-Click mittels 2+1-Finger-Tap (ein von zwei Fingern loslassen) zur Software-Bedienung und Zoomfunktionen mittel 2-Finger-Pinch (Aufziehen), Bewegungen des Mikroskoptisches mittels 3-Finger-Slide und Einstellungen der Beleuchtungsstärke mittels Seitenslides erfolgen.

Im Datendarstellungsmodus ist die Steuerung der Mikroskophardware vorzugsweise inaktiv. Mouse-Bewegungen und Mouse-Clicks, Zoom und verschiedene Bewegungen im Bild sind analog der oben beschriebenen Funktionen möglich.

In einer weiteren bevorzugten Ausführungsform ist das erste Eingabemittel ein Mehrfach-Berührungs-Bildschirm (Multi-Touch-Screen) mit haptischer Rückkopplung. Solche Systeme werden beispielsweise in "Feeling and Seeing: Issues in Force Display", Margaret Minsky et. al., 1990 ACM, oder in "Haptische Touchpad zur Infotainmentbedienung", Alexander Peters et. al. in i-com Praxisberichte 1/2010 untersucht bzw. vorgeschlagen. Selbstverständlich können auch in dieser Ausführungsform weitere Ein- und Ausgabemittel im ersten oder in weiteren Modulen angeordnet sein.

Ebenso kann ein einfacher Touch-Screen als Eingabemittel vorhanden sein. Ein solcher Touch-Screen erlaubt dem Benutzer einen schnellen und einfachen Zugriff auf Hard- und Softwarefunktionen, welche als pictogrammartige Knöpfe oder Berührungsflächen dargestellt sind. Die jeweils benötigten Funktionen kann der Benutzer vorzugsweise aus einer vordefinierten Liste auswählen. Auf diese Auswahl kann über die Mikroskop-Software zugegriffen werden. Damit kann auch ein anwendungsbezogenes Menü in Abhängigkeit verschiedener Funktionen gestaltet werden. Typische Funktionen hierfür können beispielsweise sein: Snap, livevideo, HDR-Modus (High Dynamic Range), AF (AutoFocus), EDoF (extendet depth of field mode), liveEDoF(real-time extendet depth of field mode), 3D, Stitching, BestShot, BF (Hellfeldbeleuchtung), DF (Dunkelfeldbeleuchtung), MixF (gemischte Beleuchtung), segmentierte Beleuchtung, Helligkeitsregelung usw.

Bevorzugte Ausführungsformen eines erfindungsgemäßen Steuergerätes und Varianten werden nachfolgen anhand der Figuren näher erläutert.

Dabei zeigen:
- Fig. 1:: eine erste bevorzugte Ausführungsform eines Steuergerätes mit einem Dreh-/Drück-Bedienknopf mit haptischer Rückkopplung;
- Fig. 2:: eine zweite bevorzugte Ausführungsform eines Steuergerätes mit zwei Dreh-/Drück-Bedienknöpfen mit haptischer Rückkopplung;
- Fig. 3:: eine dritte bevorzugte Ausführungsform des Steuergerätes mit einem Multi-Touch-Screen;
- Fig. 4:: eine vierte bevorzugte Ausführungsform des Steuergerätes mit einem Multi-Touch-Screen mit haptischer Rückkopplung;
- Fig. 5:: eine fünfte bevorzugte Ausführungsform des Steuergerätes mit einem Multi-Touch-Screen mit haptischer Rückkopplung für verschieden Zonen des Multi-Touch-Screens;
- Fig. 6:: eine sechste bevorzugte Ausführungsform des Steuergerätes mit einem Multi-Touch-Screen mit haptischer Rückkopplung für verschieden Zonen des Multi-Touch-Screens.

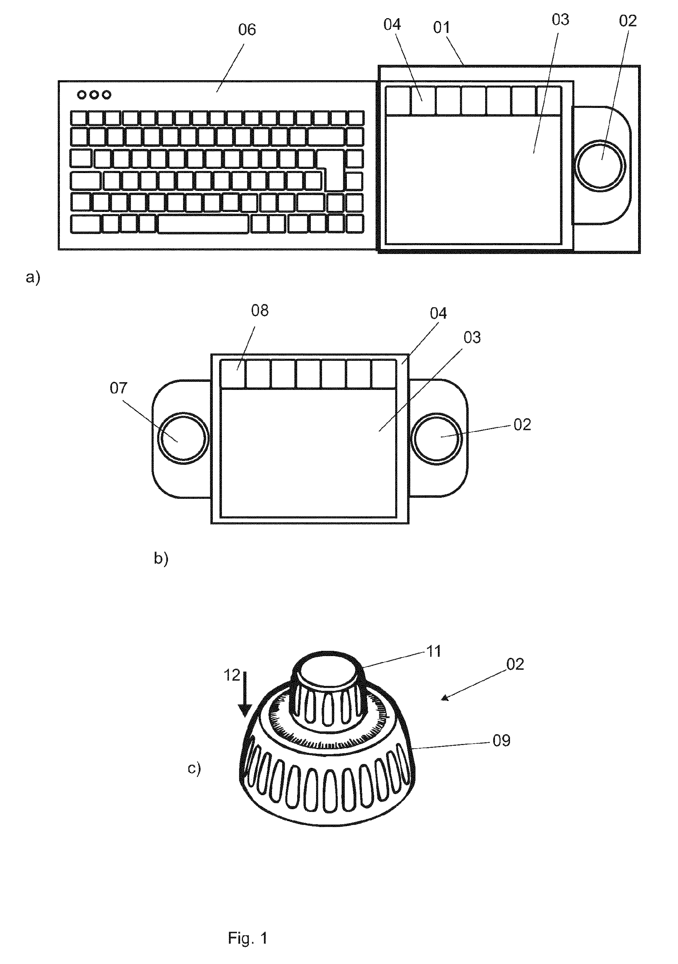

Fig. 1 zeigt eine schematische Darstellung einer ersten bevorzugten Ausführungsform eines erfindungsgemäßen Steuergerätes. Das Steuergerät umfasst ein erstes Modul 01 mit einem Dreh-/Drück-Bedienknopf 02 mit haptischer Rückkopplung als erstes Eingabemittel, ein Touch-Pad 03 als zweites Eingabemittel und ein Touch-Display 04 als kombiniertes Ein-/Ausgabemittel. Eine Tastatur 06 ist an das erste Modul 01 abnehmbar angekoppelt, so dass diese je nach Bedarf verwendbar ist (Abbildung a). Vorzugsweise erfolgt diese Ankopplung mechanisch mittels Permanentmagneten, während die elektrische Kopplung drahtlos beispielsweise über Funk erfolgt.

Abbildung b zeigt das erste Modul 01 in einer vergrößerten Darstellung, mit der Option, anstelle der Tastatur 06 einen zweiten Bedienknopf 07 an das erste Modul 01 anzukoppeln (gestrichelt dargestellt). Der zweite Bedienknopf 07 kann mit oder ohne haptische Rückkopplung ausgestattet sein. mit einer solchen Anordnung können beispielsweise Zoom und Objekttisch zweihändig eingestellt werden.

Das Touch-Display 04 umfasst in dieser Ausführungsform sieben Bereiche 08, die mit frei definierbaren Kurzbefehlen und den entsprechenden Pictogrammen belegt werden können. Je nach Betriebsmodus und Anwendungsfall werden sich die Darstellungen auf dem Touch-Display 04 unterscheiden.

Abbildung c zeigt den Dreh-/Drück-Bedienknopf 02 in einer vergrößerten Ansicht. Der Bedienknopf 02 weist ein unteres Rad 09 und ein oberes Rad 11 auf. Das untere Rad 09 weist vorzugsweise eine Drückfunktion (Pfeil 12) auf. Damit können Eingaben per "Click" bestätigt werden, oder durch Drehen in gedrückten Zustand bestimmte Eingaben vorgenommen werden. Die einzelnen, zuvor beschrieben haptischen Rückkopplungen sind in diese Darstellung nicht erkennbar. Der Bedienknopf enthält selbstverständlich Aktoren zur Umsetzung solcher Rückkopplungen.

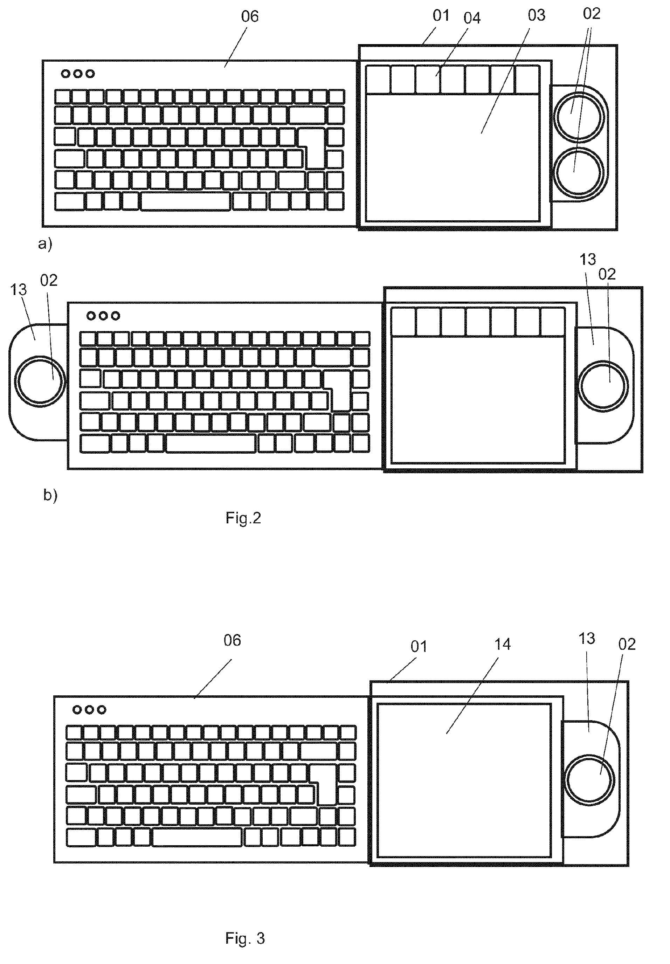

In Fig. 2 ist eine zweite bevorzugte Ausführungsform des Steuergerätes gezeigt, das zwei Dreh-/Drück-Bedienknöpfe 02 mit haptischer Rückkopplung aufweist. Die Dreh-/Drück-Bedienknöpfe 02 können beide im ersten Modul 01 angeordnet sein (Abb. a), oder beidseitig an den Außenseiten des Steuergerätes (Abb. b), das auch eine Tastatur 06 umfasst, die wie zuvor beschrieben, abnehmbar ist. Die Bedienknöpfe 02 sind dabei in sogenannten Seitenmodulen 13 angeordnet.

In der in Fig. 3 dargestellt dritten bevorzugten Ausführungsform ist im ersten Modul 01 ein Multi-Touch-Screen 14, vorgesehen, der hier eine Multi-Touch-Pad-Funktion übernimmt und ein situationsbezogenes Menü mit den erforderlichen Knöpfen und/oder Reglern oder dergleichen darstellen kann. Der Multi-Touch-Screen 14 übernimmt hier die Funktion eines Ein-/Ausgabemittels. Die Tastatur 06 ist auch hier linksseitig des Moduls 01 vorgesehen. Es ist aber alternativ (beispielsweise für Linkshänder) möglich, das Seitenmodul 13 links des Multi-Touch-Screen 14 und die Tastatur 06 rechts davon vorzusehen.

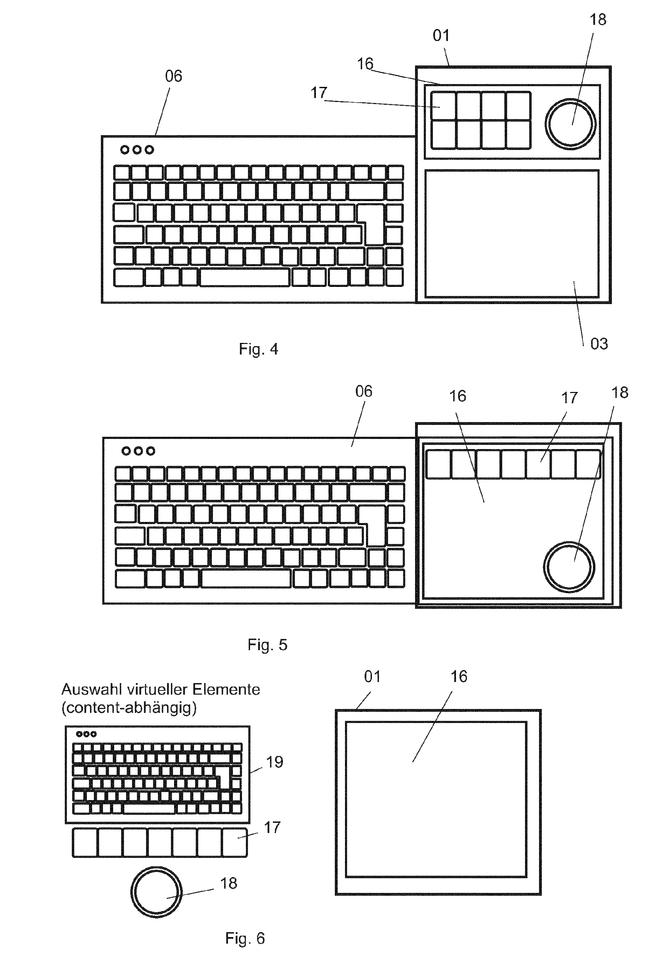

In den in Figuren 5 und 6 gezeigten Ausführungsformen umfasst das erste Modul 01 als erstes Eingabemittel einen Multi-Touch-Screen 16 mit haptischer Rückkopplung. Auf diesem sind dann die frei definierbaren Knöpfe in den Bereichen 17 und in diesem Ausführungsbeispiel ein per Software realisierter Bedienknopf 18 angeordnet. Dieser kann natürlich wegen der Software-Realisierung frei gestaltet werden, z.B. als Doppel-Schieberegler, Doppel Dreh-/Drück-Knopf oder dergleichen. Die haptische Rückkopplung kann hier überall auf dem Multi-Touch-Screen, also in den Bereichen 17 (virtuelle Knöpfe), am virtuellen Bedienknopf 18 und jeweils anwendungsbezogen per Software realisiert werden. Die Ausführungsform in Fig. 4 umfasst dabei das Multi-Touch-Pad 03, dessen Funktion in der in Fig. gezeigten Ausführungsform per Software-Definition vom Multi-Touch-Screen 16 mit übernommen wird.

Bei der in Fig. 6 gezeigten sechsten bevorzugten Ausführungsform des Steuergerätes umfasst das erste Modul den Multi-Touch-Screen 16 mit haptischer Rückkopplung für virtuelle Tastatur 19, virtuelle Knöpfe 17 und 18.

Die verschiedenen Module lassen sich den jeweiligen Erfordernissen und Kundenwünschen anpassen. Selbstverständlich sind weitere Kombinationen von Ein-/Ausgabemitteln und Darstellungen und Softwarevarianten möglich, im das erfindungsgemäße Steuergerät herzustellen.

### Bezugszeichenliste

- 01: erstes Modul
- 02: Bedienknopf
- 03: Touch-Pad
- 04: Touch-Screen
- 05: -
- 06: Tastatur
- 07: zweiter Bedienknopf
- 08: Bereich
- 09: unteres Rad
- 10: -
- 11: oberes Rad
- 12: Drückfunktion
- 13: Seitenmodul
- 14: Multi-Touch-Screen
- 15: -
- 16: Multi-Touch-Screen mit haptischer Rückkopplung
- 17: virtuelle Knöpfe
- 18: virtueller Doppel-Dreh-/Drück-Bedienknopf
- 19: virtuelle Tastatur

## Patentansprüche

1. Steuergerät zur Steuerung eines motorisierten Digitalmikroskops umfassend mindestens ein erstes Modul (01) zur Steuerung der Hardware und/oder der Software und/oder des Arbeitsablaufs des Digitalmikroskops bei der Untersuchung einer Probe, **dadurch gekennzeichnet, dass** das erste Modul (01) ein erstes Eingabemittel (02, 16) mit einer haptischen Rückkopplung zur Steuerung von Funktionen des Digitalmikroskops umfasst.

2. Steuergerät nach Anspruch 1, **dadurch gekennzeichnet, dass** das erste Eingabemittel ein Knopf mit Dreh- und/oder Drückfunktion zur Steuerung der Mikroskop-Hardware ist.

3. Steuergerät nach Anspruch 2, **dadurch gekennzeichnet, dass** der Knopf, ein doppelt koaxialer Dreh-/Drück-Bedienknopf (02) ist.

4. Steuergerät nach Anspruch 3, **dadurch gekennzeichnet, dass** der Knopf ein unteres Rad (09) und ein oberes Rad (11) umfasst, welche koaxial angeordnet sind und jeweils eine separate haptische Rückkopplung aufweisen.

5. Steuergerät nach Anspruch 1, **dadurch gekennzeichnet, dass** das das erste Eingabemittel ein Touch-Screen oder ein Multi-Touch-Screen (16) mit haptischer Rückkopplung ist.

6. Steuergerät nach einem der Ansprüche 1 bis 5, **dadurch gekennzeichnet, dass** es ein zweites Eingabemittel umfasst.

7. Steuergerät nach Anspruch 6, **dadurch gekennzeichnet, dass** das zweite Eingabemittel eine Tastatur (06) ist.

8. Steuergerät nach Anspruch 6, **dadurch gekennzeichnet, dass** das zweite Eingabemittel ein Touch-Screen (04) ist, dessen aktive Bereiche mittels Software-Funktionen frei definierbar sind.

9. Steuergerät nach einem der Ansprüche 6 bis 8, **dadurch gekennzeichnet, dass** das zweite Eingabemittel lösbar mit dem ersten Modul (01) verbindbar ist.

10. Steuergerät nach Anspruch 9, **dadurch gekennzeichnet, dass** die lösbare Verbindung mittels Permanentmagneten erfolgt.

11. Steuergerät nach einem der Ansprüche 1 bis 10, **dadurch gekennzeichnet, dass** es ein Anzeigemittel umfasst.

12. Verfahren zur Steuerung eines Digitalmikroskops, wobei eine Steuerung von Mikroskop-Hardwarefunktionen und/oder Softwarefunktionen und/oder des Arbeitsablaufes des Digitalmikroskops durch eine Dateneigabe über ein erstes Eingabemittel erfolgt, wobei eine haptische Rückkopplung an dem ersten Eingabemittel über den Erfolg oder Verlauf der Eingabe generiert wird.

13. Verfahren nach Anspruch 12, **dadurch gekennzeichnet, dass** die Steuerung der Mikroskop-Hardwarefunktionen mindestens eine der folgenden Aufgaben umfasst:
- die Steuerung der Y- und Y-Position eines Objekttisches;
- die Steuerung der Zoom-Einstellung;
- die Steuerung des Fokus des Objektives;
- Auslösen der Bild- oder Videoaufnahme

14. Verfahren nach Anspruch 12 oder 13, **dadurch gekennzeichnet, dass** die haptische Rückkopplung ein Betätigen des ersten Eingabemittels mittels einer STOP-Funktion verhindert oder erschwert.

15. Verfahren nach Anspruch 12, **dadurch gekennzeichnet, dass** die haptische Rückkopplung abschaltbar ist.
